# EUROPÄISCHE PATENTSCHRIFT

(11) **EP 3 126 538 B1**
(45) Veröffentlichungstag und Bekanntmachung des Hinweises auf die Patenterteilung: **08.05.2019**
(21) Anmeldenummer: 15712079.1
(22) Anmeldetag: 03.03.2015
(51) Int. Cl.: C23C 2/00, C23C 2/40

(54) **VORRICHTUNG UND VERFAHREN ZUR REINIGUNG EINER SCHMELZE UND SCHMELZTAUCHBESCHICHTUNGSANLAGE**
DEVICE AND METHOD FOR PURIFYING A MELT, AND HOT-DIP COATING SYSTEM
DISPOSITIF ET PROCÉDÉ DE NETTOYAGE D'UNE MASSE FONDUE ET INSTALLATION DE REVÊTEMENT PAR IMMERSION À CHAUD

(30) Priorität: 31.03.2014 DE 102014104509
(43) Veröffentlichungstag der Anmeldung: 08.02.2017
(73) Patentinhaber: ThyssenKrupp Steel Europe AG, 47166 Duisburg (DE); thyssenkrupp AG, 45143 Essen (DE)
(72) Erfinder: PETERS, Michael, 47533 Kleve (DE); SPELLEKEN, Frank, 46537 Dinslaken (DE); SPELZ, Florian, 46047 Oberhausen (DE)
(74) Vertreter: ThyssenKrupp Steel Europe AG
(86) Internationale Anmeldenummer: PCT/EP2015/054421
(87) Internationale Veröffentlichungsnummer: WO 2015/150008

(56) Entgegenhaltungen:
- CN-A- 103 014 586
- JP-A- H05 295 506
- Carli Precimeter: "Precimeter Elektromagnetische Rundpumpe", , 21 May 2011 (2011-05-21), XP055395346, Retrieved from the Internet: URL:http://www.carli-ea.com/tyska/c3bta.ht m [retrieved on 2017-08-02]

## Beschreibung

### Stand der Technik

Die vorliegende Erfindung geht aus von einer Vorrichtung und einem Verfahren zum Reinigen einer Schmelze einer Schmelztauchbeschichtungsanlage, sowie von einer Schmelztauchbeschichtungsanlage.

Aus dem Stand der Technik sind Schmelztauchbeschichtungsanlagen zur Tauchbeschichtung von Metallband hinlänglich bekannt. Bei solchen Schmelztauchbeschichtungsanlagen wird das Metallband in ein Tauchbad aus einem niedriger schmelzenden flüssigen Metall oder einer Legierung eingetaucht. Nach dem Durchlaufen des Tauchbades bleibt das flüssige Metall oder die Legierung an der Oberfläche des Metallbandes haften und bildet bei der Abkühlung einen festen metallischen Überzug auf dem Metallband. Üblicherweise wird das Metallband mittels Rollen kontinuierlich durch das Tauchbad geführt, um hohe Taktraten bei der Beschichtung des Metallbandes zu erzielen. Eine Vorrichtung zum Führen eines Metallbandes durch das Tauchbad einer Schmelztauchbeschichtungsanlage ist beispielsweise aus der Druckschrift DE 10 2011 001 216 B4 bekannt.

Beim Betrieb solcher Schmelztauchbeschichtungsanlagen bildet sich mit der Zeit Schlacke innerhalb des Tauchbades, welche sich insbesondere im Bodenbereich des Tauchbades anlagert. Durch das Eintauchen und Herausheben des Metallbandes in das Tauchbad wird diese Schlacke aufgewirbelt, so dass kleine Feststoffpartikel aus der Schlacke in Kontakt mit der Oberfläche des zu beschichtenden Metallbandes gelangen können. Die Oberflächenqualität des beschichteten Metallbandes wird hierdurch nachteiligerweise erheblich beeinträchtigt. Vor diesem Hintergrund und den steigenden Qualitätsanforderungen wird eine möglichst saubere Schmelze benötigt. Aufgrund der hohen Temperatur der Schmelze und damit verbundenen teils aggressiven Verhalten ist die Handhabung jedoch schwierig, weshalb üblicherweise die an der Oberfläche und im Bodenbereich befindliche Schlacke mit Hilfe eines Abskimmwerkzeugs oder eines Baggers entfernt wird. Diese Maßnahmen führen zu entsprechenden Stillstandzeiten und arbeitssicherheitstechnischen Gefährdungen. Unter Umständen muss das gesamte Tauchbad in regelmäßigen Abständen ausgewechselt werden. In nachteiliger Weise ergeben sich hierdurch eine nur kurze Standzeit der Schmelztauchbeschichtungsanlagen, sowie ein relativ hoher Ausschuss an Schmelze.

Zur Lösung dieses Problems schlägt die Druckschrift DE 102 34 010 B4 vor, die Bodenschlacke im Tauchbad mit einer geeigneten Absaugvorrichtung zur Oberfläche der Schmelze zu transportieren und dort mittels einer chemischen Reaktion oder durch Legieren in Oberschlacke zu verwandeln. Die Oberschlacke wird sodann aus dem Tauchbad entfernt. Nachteilig an diesem Verfahren ist, dass die Oberschlacke durch Abschöpfen oder Abpumpen von der Oberfläche des Tauchbades entfernt werden muss. Dieser Vorgang ist vergleichsweise aufwändig, stört den kontinuierlichen Betrieb der Schmelztauchbeschichtungsanlage und führt zudem zu einem relativ hohen Ausschuss an Schmelze.

Ferner ist aus dem Stand der Technik bekannt, zum Recyceln von schlackebelasteter Schmelze, diese Schmelzen chargenweise in einer Zentrifuge erstarren zu lassen und anschließend die aufgrund von Dichteunterschieden weitgehend separierten Materialien mechanisch zu trennen. Nachteiligerweise ist diese Lösung nicht zur kontinuierlichen Reinigung der Schmelze geeignet.

CN 103 014 586 A und JP H05 295506 A offenbaren Vorrichtungen zur Reinigung der Schmelze einer Schmelztauchbeschichtungsanlage und die entsprechenden Verfahren.

### Offenbarung der Erfindung

Es ist eine Aufgabe der vorliegenden Erfindung eine Vorrichtung und ein Verfahren bereitzustellen, wodurch in einfacher, kostengünstiger und effizienter Weise eine kontinuierliche Reinigung der Schmelze einer Schmelztauchbeschichtungsanlage ermöglicht wird, ohne dass hierdurch der laufende Betrieb der Schmelztauchbeschichtungsanlage beeinträchtigt wird. Zudem soll eine möglichst saubere Schmelze zur Erzielung einer hohen Beschichtungsqualität erzielt werden und gleichzeitig der Ausschuss an Schmelze minimiert werden.

Gelöst wird diese Aufgabe mit einer Vorrichtung zur Reinigung einer Schmelze einer Schmelztauchbeschichtungsanlage gemäß Anspruch 1. Die Vorrichtung umfasst u.a. eine Reinigungseinheit zum Abtrennen von Feststoffpartikeln aus der Schmelze, eine zur Reinigungseinheit führende Zuführleitung, die mit einem Tauchbad der Schmelztauchbeschichtungsanlage in Wirkverbindung bringbar ist, und eine von der Reinigungseinheit zum Tauchbad führende Rückführleitung für die mittels der Reinigungseinheit gereinigte Schmelze aufweist, wobei die Reinigungseinheit einen Hydrozyklon umfasst.

Die erfindungsgemäße Vorrichtung hat gegenüber dem Stand der Technik den Vorteil, dass eine kontinuierliche Reinigung der Schmelze vorgesehen ist, wodurch sich einerseits die

Standzeit der Schmelztauchbeschichtungsanlage verlängert und andererseits die Sauberkeit der Schmelze in erheblicher Weise steigern lässt. Gleichzeitig kann der Ausschuss der Schmelze verringert werden, da durch die Verwendung des Hydrozyklons nur die Feststoffpartikel bzw. Schlacke von der Schmelze getrennt werden, während die gereinigte Schmelze dem Tauchbad rückgeführt wird. Insbesondere werden Feststoffpartikel, wie Schlacke, Oxidhäutchen und dergleichen aus der Schmelze ausgefiltert, so dass sich diese Feststoffpartikel nicht mehr in der Beschichtung des zu beschichtenden Metallbandes niederschlagen können. Ein weiterer Vorteil der erfindungsgemäßen Vorrichtung ist, dass der laufende Betrieb der Schmelztauchbeschichtungsanlagen durch die Reinigung der Schmelze nicht beeinträchtigt wird. Ferner können mit der erfindungsgemäßen Vorrichtung in einfacher Weise auch bereits bestehende Schmelztauchbeschichtungsanlagen nachgerüstet werden. Die Schmelze umfasst vorzugsweise eine Metallschmelze in Form von geschmolzenem Beschichtungsmaterial aus schmelzflüssigem Metall oder einer Legierung. Insbesondere Zink, Aluminium und auf diesen basierende Legierungen sind hierfür üblich. Die Schmelztauchbeschichtungsanlage umfasst insbesondere eine Feuerbeschichtungsanlage und dient insbesondere zum kontinuierlichen Beschichten von Metallbändern oder zum Beschichten von einzelnen Metallbauteilen.

Vorteilhafte Ausgestaltungen und Weiterbildungen der Erfindung sind den Unteransprüchen, sowie der Beschreibung unter Bezugnahme auf die Zeichnungen entnehmbar.

Die Vorrichtung weist eine Pumpeinheit zum Fördern der Schmelze durch die Zuführleitung zur Reinigungseinheit auf. Die Pumpeinheit dient dazu, die zu reinigende Schmelze in kontinuierlicher Weise tangential in den Hydrozyklon zu fördern, wodurch im Hydrozyklon eine Abtrennung der Feststoffpartikel aus der Schmelze erzielt wird. Die Schmelze wird durch die kontinuierliche Förderung nämlich innerhalb der als Hydrozyklon ausgebildeten Reinigungseinheit in eine sich verjüngende, schraubenförmige Wirbelströmung gezwungen, wodurch sich die Feststoffpartikel im Bereich der Wandung sammeln und nach unten wandern, während sich im Inneren des Wirbels ein Rückstau und somit eine entgegengesetzt ausgerichtete Säule aus nach oben steigender gereinigter Schmelze bildet. Die Pumpeinheit ist insbesondere in die Zuführleitung integriert. Die Pumpeinheit umfasst eine elektromagnetische Pumpe und insbesondere eine elektromagnetische Rundpumpe. In vorteilhafter Weise gelangen hierbei keine bewegten Teile der Pumpe in unmittelbaren Kontakt mit der Schmelze, so dass einerseits die Abdichtung der Pumpe vereinfacht wird und andererseits die Standzeit der Pumpe erhöht wird.

Es ist erfindungsgemäß vorgesehen, dass ein der Reinigungseinheit abgewandtes Ende der Zuführleitung in einem unteren Bereich des Tauchbades angeordnet ist, so dass die Schmelze vom unteren Bereich des Tauchbades, in welchem sich die Schlacke typischerweise ablagert, in Richtung der Reinigungseinheit angesogen wird.

Gemäß einer bevorzugten Ausführungsform der vorliegenden Erfindung ist vorgesehen, dass der Hydrozyklon einen zylindrischen oberen Bereich, in welchen die Zuführleitung tangential mündet, und einen unterhalb des oberen Bereichs angeordneten konischen unteren Bereich, welcher in eine Unterlauföffnung mündet, aufweist, wobei ein mit der Rückführleitung verbundenes Tauchrohr von oben senkrecht in das Innere des oberen Bereichs ragt. Durch die tangentiale Einleitung der Schmelze in den zylindrischen oberen Bereich wird die Metallschmelz zu der abwärtsgerichteten Wirbelströmung gezwungen, welche sich aufgrund des konischen unteren Bereichs nach unten zunehmend verjüngt. Durch die Verjüngung kommt es zu einer Verdrängung von Volumen nach innen und zu einem Aufstau im unteren Bereich, was zur Bildung eines inneren, aufwärtsgerichteten Wirbels führt, der durch das Tauchrohr in die Rückführleitung entweicht. Hierdurch werden spezifisch schwerere Partikel an der Wand des Zyklons abgeschieden und somit durch die Unterlauföffnung ausgetragen, während die spezifisch leichtere Fraktion, hier die gereinigte Schmelze, durch das Tauchrohr entweicht. Es wird somit von schwereren Feststoffpartikeln gereinigte Schmelze in das Tauchbad zurückgeführt. Die Verwendung des Hydrozyklons hat den Vorteil, dass eine vergleichsweise lange Standzeit erzielt wird, da die abgeschiedenen Rückstände durch die Unterlauföffnung aus dem Hydrozyklon ausgetragen werden. Es wird durch die Verwendung der elektromagnetischen Pumpe die laminare Bewegung der flüssigen Schmelze in den Hydrozyklon ermöglicht, wodurch sich dann die benötigte Wirbelströmung ausbildet.

Die Vorrichtung weist eine Entleerungseinheit zum Abtransportieren der von der Reinigungseinheit abgetrennten Feststoffpartikel auf, wobei die Entleerungseinheit eine unterhalb der Unterlauföffnung angeordnete Formungseinheit mit wenigstens einer Form zum Formen von Masseln aus den abgetrennten Feststoffpartikeln aufweist, wobei besonders bevorzugt die Formungseinheit einen revolverartig drehbares oder linear verschiebbares Formmagazin mit einer Mehrzahl von Formen aufweist. Die abgetrennten Feststoffpartikel fließen von der Unterlauföffnung in eine temperaturbeständige Form, in der sie mir Restschmelze erstarren. Die erstarrten "Filterkuchen" können anschließend entsorgt oder recycelt werden. In vorteilhafter Weise wird somit ein (quasi-) kontinuierlicher Abtransport der abgetrennten Feststoffpartikel in einer vergleichsweise einfach zu handhabender Weise erzielt.

Gemäß einer bevorzugten Ausführungsform der vorliegenden Erfindung ist vorgesehen, dass die Vorrichtung zumindest teilweise eine Wärmeisolierung aufweist, wobei bevorzugt die Reinigungseinheit und/oder die Pumpeinheit eine Wärmeisolierung aufweisen. In vorteilhafter Weise wird mittels der Wärmeisolierung ein übermäßiger Abfall der Temperatur der Schmelze während der Reinigung verhindert, so dass die Viskosität der Schmelze nicht zu stark ansteigt bzw. die Schmelze nicht erstarrt.

Gemäß einer bevorzugten Ausführungsform der vorliegenden Erfindung ist vorgesehen, dass die Vorrichtung eine Temperierungseinheit zum Heizen und/oder Kühlen der Reinigungseinheit und/oder der Pumpeinheit aufweist. In vorteilhafter Weise kann mittels der Temperierungseinheit ein übermäßiger Temperaturabfall der Schmelze, sowie ein Überhitzen der Pumpeinheit verhindert werden.

Ein weiterer Gegenstand der vorliegenden Erfindung ist eine Schmelztauchbeschichtungsanlage zum Beschichten von Metallband aufweisend ein mit Schmelze befüllbares Tauchbad und eine Transportvorrichtung zum Transport des Metallbands durch das Tauchbad, wobei die Schmelztauchbeschichtungsanlage die nach Ansprüchen 1-7 erfindungsgemäße Vorrichtung zur Reinigung der Schmelze aufweist.

Ein weiterer Gegenstand der vorliegenden Erfindung ist ein Verfahren zum Reinigen einer Schmelze einer Schmelztauchbeschichtungsanlage nach Anspruch 9, wobei u.a. die Schmelze aus einem Tauchbad der Schmelztauchbeschichtungsanlage durch eine Zuführleitung einer Reinigungseinheit zugeführt wird, wobei innerhalb der Reinigungseinheit Feststoffpartikel von der Schmelze abgetrennt werden und wobei die mittels der Reinigungseinheit gereinigte Schmelze durch eine Rückführleitung zurück in das Tauchbad geführt wird, wobei die Schmelze innerhalb der als Hydrozyklon ausgebildeten Reinigungseinheit in einer sich verjüngenden, schraubenförmigen Wirbelströmung geführt wird.

Die Schmelze wird mittels einer elektromagnetischen Rundpumpe von dem Tauchbad durch die Zuführleitung zur Reinigungseinheit gepumpt, wobei die Schmelze tangential in das Innere des Hydrozyklon eingeleitet wird.

Es ist erfindungsgemäß vorgesehen, dass die aus der Schmelze durch die Wirbelströmung abgetrennten Feststoffpartikel durch eine Unterlauföffnung des Hydrozyklons abgeführt werden und die gereinigte Schmelze durch ein der Unterlauföffnung gegenüberliegendes vertikales Tauchrohr der Rückführleitung zugeführt wird.

Es ist erfindungsgemäß vorgesehen, dass die abgetrennten Feststoffpartikel in einer Form einer Entleerungseinheit in eine Massel geformt werden.

Gemäß einer bevorzugten Ausführungsform der vorliegenden Erfindung ist vorgesehen, dass die Reinigungseinheit und/oder die elektromagnetische Rundpumpe mittels einer Temperierungseinheit geheizt oder gekühlt werden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht einer Schmelztauchbeschichtungsanlage mit einer Vorrichtung gemäß einer beispielhaften nicht erfinderischen Ausführungsform.

- **Figur 2**: zeigen eine schematische Perspektivansicht einer Reinigungseinheit der Vorrichtung gemäß der beispielhaften nicht erfinderischen Ausführungsform.

- **Figur 3**: zeigt eine schematische Perspektivansicht einer Schmelztauchbeschichtungsanlage mit einer Vorrichtung gemäß einer beispielhaften erfinderischen Ausführungsform.

- **Figur 4**: zeigen eine schematische Perspektivansicht der Vorrichtung gemäß der beispielhaften erfinderischen Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

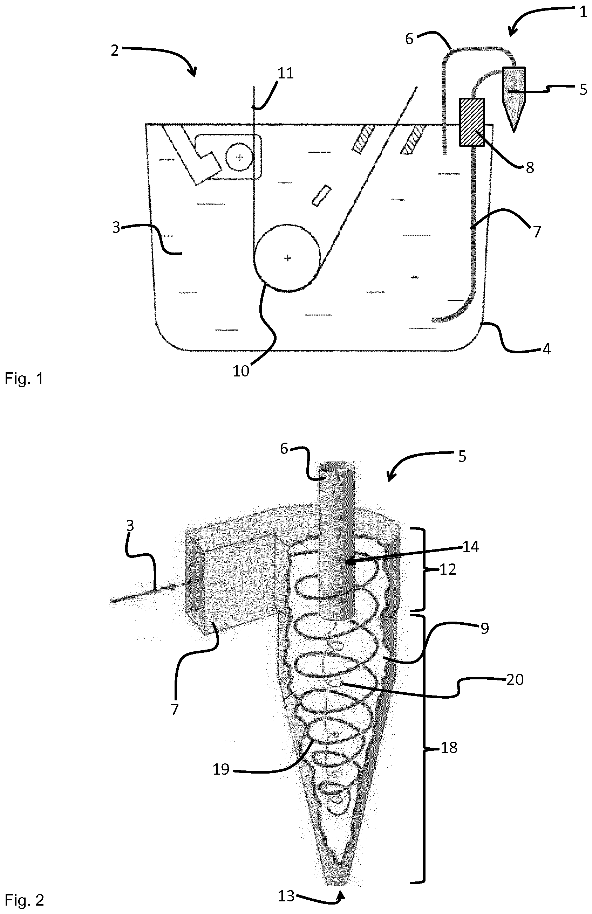

In **Figur 1** ist eine schematische Ansicht einer Schmelztauchbeschichtungsanlage 2 mit einer Vorrichtung gemäß einer beispielhaften nicht erfinderischen Ausführungsform dargestellt.

Die Schmelztauchbeschichtungsanlage 2 umfasst beispielhaft ein Tauchbad 4, welches mit einer Schmelze 3, beispielsweise geschmolzenes Beschichtungsmaterial in Form von Zink, Aluminium oder auf diesen basierenden Legierungen, befüllt ist. Mittels eines Transportmechanismus 10, welcher im vorliegenden Beispiel eine Transportrolle nebst mehreren Führungsrollen umfasst, wird ein Metallband 11 kontinuierlich durch das Tauchbad 4 geführt. Dabei benetzt die Schmelze 3 die Oberfläche des Metallbandes 11. Nach der Abkühlung bildet sich auf dem Metallband 11 somit ein fester metallischer Überzug.

Beim Betrieb der Schmelztauchbeschichtungsanlage 2 reichern sich in der Schmelze 3 mit zunehmender Zeit Verunreinigungen in Form von Feststoffpartikeln an, welche sich als Schlacke insbesondere im Bodenbereich des Tauchbades 4 ansammeln. Die Schlacke kann neben der Bodenschlacke aber auch als Oberschlacke oder Schwebeschlacke auftreten. Damit dieses Schlacke die Beschichtung des Metallbandes 11 nicht nachteilig beeinflusst, weist die Schmelztauchbeschichtungsanlage 2 eine Vorrichtung zum Reinigen der Schmelze 3 auf, mit dessen Hilfe die Schlacke kontinuierlich aus dem Tauchbad 4 entfernt wird.

Die Vorrichtung weist hierfür eine Zuführleitung 7 auf, dessen freies Ende im unteren Bereich, d.h. knapp über dem Boden, des Tauchbades 4 angeordnet ist und dessen anderes Ende in eine Reinigungseinheit 5 mündet. Die Zuführleitung 7 durchläuft dabei eine Pumpeneinheit 8, welche als elektromagnetische Rundpumpe ausgebildet ist. Die elektromagnetische Rundpumpe dient als Förderpumpe und pumpt mit Schlacke behaftete Schmelze 3 aus dem unteren Bereich des Tauchbads 4 durch die Zuführleitung 7 in die Reinigungseinheit 5.

Die Reinigungseinheit 5 umfasst einen Hydrozyklon 9, dessen Funktionsweise nachfolgend anhand von Figur 2 im Detail dargestellt und erläutert wird. Innerhalb des Hydrozyklons 9 wird die Schlacke von der übrigen Schmelze 3 getrennt. Die von der Schlacke gereinigte Schmelze 3 wird sodann über eine Rückführleitung 6 zurück in das Tauchbad 4 geleitet, während die abgetrennte Schlacke gesondert abgeführt wird.

In **Figur 2** ist nun eine schematische Perspektivansicht der Reinigungseinheit 5 der Vorrichtung gemäß einer nicht erfinderischen Ausführungsform im Detail dargestellt. Die als Hydrozyklon 9 ausgebildete Reinigungseinheit 5 umfasst einen zylindrisch ausgebildeten oberen Bereich 12, in welchen die Zuführleitung 7 mündet. Die Mündung der Zuführleitung 7 in den Hydrozyklon 9 ist dabei derart ausgebildet, dass die mit Schlacke behaftete Schmelze 3 tangential in das Innere des zylindrischen oberen Bereichs 12 gepumpt wird. Der Hydrozyklon 9 weist ferner einen zylindrisch ausgebildeten unteren Bereich 18 auf, der sich an den oberen Bereich 12 anschließt und sich nach unten bis zu einer Unterlauföffnung 13 zylinderstumpfartig verjüngt. Die Schmelze 3 wird somit in eine nach unten strömende Wirbelströmung 19 gezwungen. Die elektromagnetische Rundpumpe fördert die mit Schlacke behaftete Schmelze 3 dabei kontinuierlich in den Hydrozyklon 9, wobei die Eintrittsgeschwindigkeit der Schmelze 3 in den Hydrozyklon 9 derart bemessen ist, dass sich eine Scherströmung einstellt, die zur Abscheidung der Schlacke von der übrigen Schmelze 3 führt. Die abwärts gerichtete Wirbelströmung 19 verjüngt sich dabei aufgrund der zylindrischen Form des unteren Bereichs 18, wodurch es zu einer Verdrängung von Volumen nach innen und zu einem Aufstau im unteren Bereich 18 des Hydrozyklons 9 kommt. Hierdurch bildet sich im Inneren ein zentraler aufwärtsgerichteter Wirbel 20, der in ein von oben vertikal in das Innere des Hydrozyklons 9 ragendes Tauchrohr 14 mündet. Die spezifisch schwereren Partikel der Schlacke werden an der Wand des Hydrozyklons 9 abgeschieden und werden somit durch eine im Bodenbereich des Hydrozyklons 9 angeordnete Unterlauföffnung 13 aus dem Hydrozyklon 9 ausgetragen, während die spezifisch leichtere Fraktion, also die von der Schlacke gereinigte Schmelze 3, durch das Tauchrohr 14 entweicht.

Das Tauchrohr 14 ist mit der Rückführleitung 6 verbunden, so dass die gereinigte Schmelze 3 in das Tauchbad 4 zurückgeführt wird, wobei das Ende der Rückführleitung 6 im oberen Bereich des Tauchbades 14 angeordnet ist. Die aus der Unterlauföffnung 13 ausgeschiedene Schlacke kann sodann entsorgt oder recycelt werden.

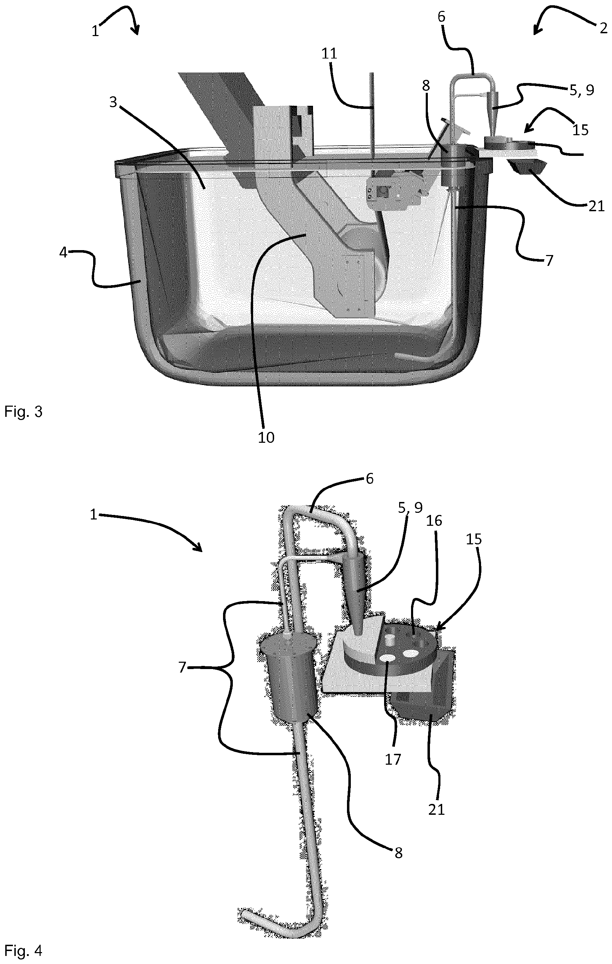

In **Figuren** 3 und 4 sind eine schematische Perspektivansicht einer Schmelztauchbeschichtungsanlage 2 mit einer Vorrichtung 1 gemäß einer beispielhaften erfinderischen Ausführungsform dargestellt. Die Vorrichtung 1 gemäß dieser erfinderischen Ausführungsform weist eine Entleerungseinheit 15 auf.

Die Entleerungseinheit 15 ist unterhalb der Unterlauföffnung 13 des Hydrozyklons 9 angeordnet und dient dazu, die Schlacke bzw. die mit Restschmelze versehenden Feststoffpartikel in einer leicht handhabbaren Form abzutransportieren. Hierfür weist die Entleerungseinheit 15 eine Formungseinheit mit einer Mehrzahl von temperaturbeständigen Formen 16 auf, welche revolverartig um eine zur Längsachse des Hydrozyklons 9 parallele Drehachse drehbar gelagert ist. Die Formen 16 sind kreisförmig um die Drehachse angeordnet, so dass durch eine Drehung der Formungseinheit eine der Formen 16 unterhalb der Unterlauföffnung 13 angeordnet wird. Die von der Schmelze 3 im Hydrozyklon 9 abgetrennte Schlacke läuft durch die Unterlauföffnung 13 in die entsprechende Form 16. Wenn diese Form 16 vollständig gefüllt ist, wird die Formungseinheit gedreht, so dass eine freie neue Form 16 unterhalb der Unterlauföffnung 13 angeordnet ist. Die in der vollständig gefüllten Form 16 angeordnete Schlacke kühlt derweil aus und erstarrt in der Form 16 zu einer Massel 17 in Form eines Filterkuchens. Vorzugsweise werden die erstarrten Masseln 17 automatisch aus der entsprechenden Form 16 entfernt und beispielsweise in einen transportablen Auffangbehälter 21 überführt. In Figur 4 ist die Vorrichtung 1 gemäß der beispielhaften erfinderischen Ausführungsform aus einer anderen Perspektive schematisch dargestellt.

### Bezugszeichenliste

- 1: Vorrichtung
- 2: Schmelztauchbeschichtungsanlage
- 3: Schmelze
- 4: Tauchbad
- 5: Reinigungseinheit
- 6: Rückführleitung
- 7: Zuführleitung
- 8: Pumpeinheit
- 9: Hydrozyklon
- 10: Transportvorrichtung
- 11: Metallband
- 12: Oberer Bereich
- 13: Unterlauföffnung
- 14: Tauchrohr
- 15: Entleerungseinheit
- 16: Form
- 17: Masseln
- 18: Unterer Bereich
- 19: Wirbelströmung
- 20: Aufwärtswirbel
- 21: Auffangbehälter

## Patentansprüche

1. Vorrichtung (1) zur Reinigung einer Schmelze (3) einer Schmelztauchbeschichtungsanlage (2), wobei die Vorrichtung (1) eine Reinigungseinheit (5) zum Abtrennen von Feststoffpartikeln aus der Schmelze (3), eine zur Reinigungseinheit (5) führende Zuführleitung (7), die mit einem Tauchbad (4) der Schmelztauchbeschichtungsanlage (2) in Wirkverbindung bringbar ist, und eine von der Reinigungseinheit (5) zum Tauchbad (4) führende Rückführleitung (6) für die mittels der Reinigungseinheit (5) gereinigte Schmelze (3) aufweist, **dadurch gekennzeichnet, dass** die Reinigungseinheit (5) einen Hydrozyklon (9) umfasst, dass ein der Reinigungseinheit (5) abgewandtes Ende der Zuführleitung (7) in einem unteren Bereich des Tauchbades (4) angeordnet ist, dass die Vorrichtung (1) eine Entleerungseinheit (15) zum Abtransportieren der von der Reinigungseinheit (5) abgetrennten Feststoffpartikel aufweist, und dass die Vorrichtung (1) eine Pumpeinheit (8) zum Fördern der Schmelze (3) durch die Zuführleitung (7) zur Reinigungseinheit (5) aufweist, wobei die Pumpeinheit (8) eine elektromagnetische Pumpe umfasst und wobei die Entleerungseinheit (15) eine unterhalb der Unterlauföffnung (13) angeordnete Formungseinheit mit wenigstens einer Form (16) zum Formen von Masseln (17) aus den abgetrennten Feststoffpartikeln aufweist.

2. Vorrichtung (1) nach Anspruch 1, wobei die Pumpeinheit (8) in die Zuführleitung (7) integriert ist.

3. Vorrichtung (1) nach einem der Ansprüche 1 oder 2, wobei die elektromagnetische Pumpe eine elektromagnetische Rundpumpe umfasst.

4. Vorrichtung (1) nach einem der vorhergehenden Ansprüche, wobei der Hydrozyklon (9) einen zylindrischen oberen Bereich (12), in welchen die Zuführleitung (7) tangential mündet, und einen unterhalb des oberen Bereichs (12) angeordneten konischen unteren Bereich (18), welcher in eine Unterlauföffnung (13) mündet, aufweist, wobei ein mit der Rückführleitung (6) verbundenes Tauchrohr (14) von oben senkrecht in das Innere des oberen Bereichs (12) ragt.

5. Vorrichtung (1) nach einem der vorhergehenden Ansprüche, wobei die Formungseinheit ein revolverartig drehbares oder linear verschiebbares Formmagazin mit einer Mehrzahl von Formen (16) aufweist.

6. Vorrichtung (1) nach einem der vorhergehenden Ansprüche, wobei die Vorrichtung (1) zumindest teilweise eine Wärmeisolierung aufweist, wobei bevorzugt die Reinigungseinheit (5) und/oder die Pumpeinheit (8) eine Wärmeisolierung aufweisen.

7. Vorrichtung (1) nach einem der vorhergehenden Ansprüche, wobei die Vorrichtung (1) eine Temperierungseinheit zum Heizen und/oder Kühlen der Reinigungseinheit (5) und/oder der Pumpeinheit (8) aufweist.

8. Schmelztauchbeschichtungsanlage (2) zum Beschichten von Metallband (11) aufweisend ein mit Schmelze (3) befüllbares Tauchbad (4) und eine Transportvorrichtung (10) zum Transport des Metallbands (11) durch das Tauchbad (4), wobei die Schmelztauchbeschichtungsanlage (2) eine Vorrichtung (1) zur Reinigung der Schmelze (3) gemäß einem der vorhergehenden Ansprüche aufweist.

9. Verfahren zum Reinigen einer Schmelze (3) einer Schmelztauchbeschichtungsanlage (2), wobei die Schmelze (3) aus einem unteren Bereich des Tauchbads (4) der Schmelztauchbeschichtungsanlage (2) durch eine Zuführleitung (7) einer Reinigungseinheit (5) zugeführt wird, wobei innerhalb der Reinigungseinheit (5) Feststoffpartikel von der Schmelze (3) abgetrennt werden und wobei die mittels der Reinigungseinheit (5) gereinigte Schmelze (3) durch eine Rückführleitung (6) zurück in das Tauchbad (4) geführt wird, **dadurch gekennzeichnet, dass** die Schmelze (3) innerhalb der als Hydrozyklon (9) ausgebildeten Reinigungseinheit (5) in einer sich verjüngenden, schraubenförmigen Wirbelströmung geführt wird, und dass die aus der Schmelze durch die Wirbelströmung abgetrennten Feststoffpartikel durch eine Unterlauföffnung des Hydrozyklons abgeführt werden und die gereinigte Schmelze durch ein der Unterlauföffnung gegenüberliegendes vertikales Tauchrohr der Rückführleitung zugeführt wird, und dass die Schmelze (3) mittels einer elektromagnetischen Rundpumpe von dem Tauchbad (4) durch die Zuführleitung (7) zur Reinigungseinheit (3) gepumpt wird, wobei die Schmelze (3) tangential in das Innere des Hydrozyklon (9) eingeleitet wird und wobei die abgetrennten Feststoffpartikel in einer Form einer Entleerungseinheit (15) in eine Massel (17) geformt werden.

10. Verfahren nach Anspruch 9, wobei die Reinigungseinheit und/oder die elektromagnetische Rundpumpe mittels einer Temperierungseinheit geheizt oder gekühlt werden.

## Claims

1. Device (1) for cleaning a melt (3) of a hot dip coating system (2), wherein the device (1) comprises a cleaning unit (5) for separating off solid particles from the melt (3), a supply line (7) which leads to the cleaning unit (5) and can be brought into operative connection with a dip bath (4) of the hot dip coating system (2), and a return line (6), which leads from the cleaning unit (5) to the dip bath (4), for the melt (3) cleaned by means of the cleaning unit (5), **characterized in that** the cleaning unit (5) comprises a hydrocyclone (9), **in that** an end of the supply line (7), which end faces away from the cleaning unit (5), is arranged in a lower region of the dip bath (4), **in that** the device (1) comprises an emptying unit (15) for transporting away the solid particles separated off by the cleaning unit (5), and **in that** the device (1) comprises a pump unit (8) for conveying the melt (3) through the supply line (7) to the cleaning unit (5), wherein the pump unit (8) comprises an electromagnetic pump and wherein the emptying unit (15) comprises a molding unit arranged below the underflow opening (13), having at least one mold (16) for molding pigs (17) from the separated-off solid particles.

2. Device (1) according to Claim 1, wherein the pump unit (8) is integrated in the supply line (7).

3. Device (1) according to either of Claims 1 and 2, wherein the electromagnetic pump comprises an electromagnetic round pump.

4. Device (1) according to one of the preceding claims, wherein the hydrocyclone (9) comprises a cylindrical upper region (12), into which the supply line (7) opens tangentially, and a conical lower region (18) which is arranged below the upper region (12) and opens into an underflow opening (13), wherein a dip tube (14) which is connected to the return line (6) projects vertically from above into the interior of the upper region (12).

5. Device (1) according to one of the preceding claims, wherein the molding unit comprises a mold magazine which is rotatable in the manner of a turret or is linearly displaceable and has a plurality of molds (16).

6. Device (1) according to one of the preceding claims, wherein the device (1) at least partially comprises thermal insulation, wherein the cleaning unit (5) and/or the pump unit (8) preferably comprises thermal insulation.

7. Device (1) according to one of the preceding claims, wherein the device (1) comprises a temperature control unit for heating and/or cooling the cleaning unit (5) and/or the pump unit (8).

8. Hot dip coating system (2) for coating metal strip (11), comprising a dip bath (4) which can be filled with melt (3), and a transport device (10) for transporting the metal strip (11) through the dip bath (4), wherein the hot dip coating system (2) comprises a device (1) for cleaning the melt (3) according to one of the preceding claims.

9. Method for cleaning a melt (3) of a hot dip coating system (2), wherein the melt (3) is supplied from a lower region of the dip bath (4) of the hot dip coating system (2) through a supply line (7) to a cleaning unit (5), wherein solid particles are separated off from the melt (3) within the cleaning unit (5), and wherein the melt (3) cleaned by means of the cleaning unit (5) is guided through a return line (6) back into the dip bath (4), **characterized in that** the melt (3) is guided within the cleaning unit (5), which is designed as a hydrocyclone (9), in a tapering, helical vortex flow, and **in that** the solid particles separated off from the melt by the vortex flow are removed through an underflow opening of the hydrocyclone, and the cleaned melt is supplied by a vertical dip pipe opposite the underflow opening to the return line, and **in that** the melt (3) is pumped by means of an electromagnetic round pump from the dip bath (4) through the supply line (7) to the cleaning unit (3), wherein the melt (3) is introduced tangentially into the interior of the hydrocyclone (9) and wherein the separated-off solid particles are molded into a pig (17) in a mold of an emptying unit (15).

10. Method according to Claim 9, wherein the cleaning unit and/or the electromagnetic round pump are heated or cooled by means of a temperature control unit.

## Revendications

1. Dispositif (1) de nettoyage d'une matière fondue (3) d'une installation de revêtement par immersion à chaud (2), le dispositif (1) comportant une unité de nettoyage (5) destinée à séparer des particules solides de la matière fondue (3), un conduit d'alimentation (7) menant à l'unité de nettoyage (5) et pouvant être mis en liaison fonctionnelle avec un bain d'immersion (4) de l'installation de revêtement par immersion à chaud (2) et un conduit de retour (6) allant de l'unité de nettoyage (5) au bain d'immersion (4) et destiné à la matière fondue (3) nettoyée au moyen de l'unité de nettoyage (5), **caractérisé en ce que** l'unité de nettoyage (5) comprend un hydrocyclone (9), **en ce qu'**une extrémité du conduit d'alimentation (7), opposée à l'unité de nettoyage (5), est disposée dans une zone inférieure du bain d'immersion (4), **en ce que** le dispositif (1) comporte une unité de vidage (15) destinée à emporter les particules solides séparées par l'unité de nettoyage (5), et **en ce que** le dispositif (1) comporte une unité de pompe (8) destinée à acheminer la matière fondue (3) à travers le conduit d'alimentation (7) vers l'unité de nettoyage (5), l'unité de pompe (8) comprenant une pompe électromagnétique et l'unité de vidage (15) comprenant une unité de formage disposée au-dessous de l'ouverture d'écoulement inférieure (13) et comportant au moins un moule (16) destiné à former des saumons (17) à partir des particules solides séparées.

2. Dispositif (1) selon la revendication 1, dans lequel l'unité de pompe (8) est intégrée dans le conduit d'alimentation (7).

3. Dispositif (1) selon l'une des revendications 1 ou 2, dans lequel la pompe électromagnétique comprend une pompe rotative électromagnétique.

4. Dispositif (1) selon l'une des revendications précédentes, l'hydrocyclone (9) comportant une zone supérieure cylindrique (12) dans laquelle débouche le conduit d'alimentation (7) et une zone inférieure conique (18) disposée au-dessous de la zone supérieure (12) et débouchant dans une ouverture d'écoulement inférieure (13), un tube plongeur (14) raccordé au conduit de retour (6) faisant saillie depuis le haut perpendiculairement à l'intérieur de la zone supérieure (12).

5. Dispositif (1) selon l'une des revendications précédentes, dans lequel l'unité de moulage comprend un magasin de moules à déplacement linéaire ou rotatif à la manière d'un revolver comportant une pluralité de moules (16).

6. Dispositif (1) selon l'une des revendications précédentes, le dispositif (1) comportant au moins partiellement une isolation thermique, l'unité de nettoyage (5) et/ou l'unité de pompe (8) comportant de préférence une isolation thermique.

7. Dispositif (1) selon l'une des revendications précédentes, le dispositif (1) comportant une unité de régulation de température destinée à chauffer et/ou refroidir l'unité de nettoyage (5) et/ou l'unité de pompe (8).

8. Installation de revêtement par immersion à chaud (2), destinée à revêtir une bande métallique (11), comprenant un bain d'immersion (4) pouvant être rempli de matière fondue (3) et un dispositif de transport (10) destiné à transporter la bande métallique (11) à travers le bain d'immersion (4), l'installation de revêtement par immersion à chaud (2) comportant un dispositif (1) destiné à nettoyer la matière fondue (3) selon l'une des revendications précédentes.

9. Procédé de nettoyage d'une matière fondue (3) d'une installation de revêtement par immersion à chaud (2), la matière fondue (3) étant amenée d'une zone inférieure du bain d'immersion (4) de l'installation de revêtement par immersion à chaud (2) à une unité de nettoyage (5) par le biais d'un conduit d'alimentation (7), les particules solides étant séparées de la matière fondue (3) à l'intérieur de l'unité de nettoyage (5), et la matière fondue (3) nettoyée au moyen de l'unité de nettoyage (5) étant ramenée dans le bain d'immersion (4) par un conduit de retour (6), **caractérisé en ce que** la matière fondue (3) est guidée à l'intérieur de l'unité de nettoyage (5), conçue comme un hydrocyclone (9), suivant un écoulement tourbillonnaire hélicoïdal conique et **en ce que** les particules solides séparées de la matière fondue par l'écoulement tourbillonnaire sont évacuées par une ouverture d'écoulement inférieure de l'hydrocyclone et la matière fondue nettoyée est amenée au conduit de retour par le biais d'un tube plongeur vertical opposé à l'ouverture d'écoulement inférieure, et **en ce que** la matière fondue (3) est pompée au moyen d'une pompe électromagnétique du bain d'immersion (4) vers l'unité de nettoyage (3) par le biais du conduit d'alimentation (7), la matière fondue (3) étant introduite tangentiellement à l'intérieur de l'hydrocyclone (9) et les particules solides séparées étant mises sous la forme d'un saumon (17) dans un moule d'une unité de vidage (15).

10. Procédé selon la revendication 9, l'unité de nettoyage et/ou la pompe rotative électromagnétique étant chauffées ou refroidies au moyen d'une unité de régulation de température.
